# EUROPÄISCHE PATENTSCHRIFT

(11) **EP 2 637 884 B1**
(45) Veröffentlichungstag und Bekanntmachung des Hinweises auf die Patenterteilung: **07.01.2015**
(21) Anmeldenummer: 11818987.7
(22) Anmeldetag: 08.11.2011
(51) Int. Cl.: B60K 11/08, B60R 19/52, F16B 5/00, F16B 5/02, F16B 21/09

(54) **KÜHLERGITTER FÜR EIN KRAFTFAHRZEUG**
RADIATOR GRILLE FOR A MOTOR VEHICLE
GRILLE DE RADIATEUR POUR VÉHICULE AUTOMOBILE

(30) Priorität: 08.11.2010 DE 102010050515
(43) Veröffentlichungstag der Anmeldung: 18.09.2013
(73) Patentinhaber: Decoma (Germany) GmbH, 66280 Sulzbach / Saar (DE)
(72) Erfinder: HUTTENLOCHER, Marc, 72622 Nürtingen (DE)
(74) Vertreter: Rausch, Gabriele
(86) Internationale Anmeldenummer: PCT/DE2011/001947
(87) Internationale Veröffentlichungsnummer: WO 2012/062280

(56) Entgegenhaltungen:
- DE-A1- 1 950 610
- DE-A1- 4 238 725
- DE-A1- 10 050 419
- DE-B3- 10 210 366
- GB-A- 2 242 722

## Beschreibung

### Technisches Gebiet

Die vorliegende Erfindung betrifft ein Anbauteil für ein Fahrzeug mit einer Anzahl von Befestigungsstellen, die mit Durchbrüchen zur Aufnahme von Ausricht- oder Befestigungsmitteln, insbesondere von Schweißbolzen, Schrauben oder Nieten, versehen und dazu eingerichtet sind, in einer Vormontagesituation rastend zwischen mehreren vorgegebenen Positionen in Bezug auf die eingesetzten Ausricht- oder Befestigungsmittel bewegbar gehalten zu sein, um eine Justage des Anbau- oder Verkleidungsteils in Bezug auf die Anbaustelle an einem Fahrzeug zu ermöglichen. Insbesondere betrifft die vorliegende Erfindung ein Kühlergitter oder Kühlergrill mit diesen Merkmalen. Weiterhin betrifft die vorliegend Erfindung ein Verfahren zur Montage eines derartigen Anbau und Verkleidungsteils.

### Hintergrund der Erfindung

Anbauteile für Fahrzeuge und insbesondere das vordere Kühlergitter eines Kraftfahrzeugs sind üblicherweise in einer Anzahl von zweckmäßig ausgebildeten Befestigungsstellen an einem karosseriefesten Bauteil befestigt. Bei dem bezeichneten Bauteil kann es sich beispielsweise um die Motorraumabdeckung, einen Querträger, ein Frontend-Modul oder einen Stoßfänger handeln. Bei der Montage des Kühlergitters wird typisch vor der endgültigen Fixierung eine sehr exakte Ausrichtung vorgenommen, um ein gleichmäßiges Spaltmaß zu den angrenzenden Teilen unabhängig von den auftretenden Toleranzen zu erreichen. Dieses einheitliche Spaltmaß wird vom Endkunden als ein Maßstab für die Wertanmutung des Kraftfahrzeugs wahrgenommen.

Eine sehr einfache, kostengünstige und schnelle Befestigung von Anbauteile an Fahrzeugen wird mit Clipsverbindungen erreicht. Clipse erfordern allerdings eine formschlüssige Befestigungssituation und erlauben regelmäßig keine Ausrichtung der Bauteile zueinander. In den gebräuchlichen Lösungen ist eine Ausrichtung oftmals mit Schrauben und Langlöchern an den Befestigungsstellen realisiert. Dabei stellen jedoch das Auffinden der korrekten Position und vor allem deren Einhalten bis zur Herstellung der haltbaren Verbindung nach dem Anziehen der Schraube das Geschick des Werkers vor einige Herausforderungen. Eine gewisse Verbesserung schaffen hier die in dem amtlichen gattungsbildenden Dokument DE 42 38 725 A1 offenbarten einstellbaren Befestigungsmittel für die Anbindung eines Kühlergitters. Damit ist die Ausrichtung durch Verdrehen eines Exzenterkörpers feinfühlig möglich, wodurch das Auffinden einer genauen Position erleichtert ist. Zudem schließt die selbsthemmende Wirkung einen Verlust der Ausrichtung durch eine unbeabsichtigte Bewegung der Bauteile zueinander bis zum Herstellen der haltbaren Verbindung einigermaßen sicher aus. Jedoch muss der Werker während der Ausrichtung des Kühlergitters die Exzenterkörper auf irgendeine Art mechanisch betätigen. Der Exzenterkörper kann somit nicht an einer Stelle angeordnet werden, die während der Positionierung unzugänglich ist. Das wiederum setzt der Verbausituation mitunter enge Grenzen. Da im typischen Fall die Positionierung des Kühlergitters einer der letzten Schritte in der Montage des Fahrzeugvorderteils ist, ergibt sich für diese bekannte Lösung eine eingeschränkte Verwendbarkeit.

### Zusammenfassung der Erfindung

Unter einem ersten Aspekt stellt sich die vorliegende Erfindung die Aufgabe, ein Anbauteil für ein Fahrzeug und insbesondere ein Kühlergitter für ein Kraftfahrzeug derart weiterzubilden, dass eine vereinfachte Montage möglich ist, und dabei ein verbessertes Fugenbild im montierten Zustand erzielt wird.

Unter einem zweiten Aspekt stellt sich die vorliegende Erfindung die Aufgabe, ein besonders einfaches und sicheres Verfahren zur Montage eines Anbauteils für ein Fahrzeug und insbesondere ein Kühlergitter an einem Kraftfahrzeug bereitzustellen.

Die Aufgabe unter dem ersten Aspekt wird gelöst durch ein Anbauteil für ein Fahrzeug mit den im Patentanspruch 1 angegebenen Merkmalen.

Die Aufgabe unter dem zweiten Aspekt wird gelöst durch ein Verfahren mit den im Patentanspruch 10 angegebenen Schritten.

Durch die erfindungsgemäße Ausgestaltung des Anbauteils lassen sich genaue Spaltmaße bei kurzer Montagezeit erzielen. Die Ausrichtung des erfindungsgemäßen Anbauteils muss nicht zusammen mit dessen endgültiger Fixierung vorgenommen werden. Insbesondere ergibt sich für ein typisches Kühlergitter der Vorteil, dass dessen Ausrichtung in Bezug auf die geschlossene Motorraumabdeckung hinsichtlich der sichtbaren Spalte auch dann möglich ist, wenn die endgültige Fixierung wegen der Lage der Anbaustellen nur bei geöffneter Motorraumabdeckung möglich ist. Bislang war es zur Vermeidung von zusätzlichen Haltevorrichtungen erforderlich, das Einsetzen der Befestigungsschrauben, Clipse oder Niete durch die Öffnungen des Kühlergitters vorzusehen, um eine bei geöffneter Motorraumabdeckung eingestellte Ausrichtung nicht zu verlieren. Nunmehr braucht die Auswahl der Lage der Anbaustellen des Kühlergitters an der Fahrzeugkarosserie nicht mehr dieser Nebenbedingung unterworfen zu werden.

Vorteilhafte Ausgestaltungen und Weiterbildungen des erfindungsgemäßen Fahrzeugverkleidungsteils ergeben sich aus den abhängigen Unteransprüchen.

### Kurzbeschreibung der Erfindung

Verschiedene bevorzugte Ausführungsformen des Anbauteils für ein Fahrzeug werden nachfolgend beispielshalber beschrieben, wobei veranschaulichend auf die beigefügten schematischen Zeichnungen Bezug genommen wird. Darin zeigen:
- Fig. 1: eine schematische perspektivische Darstellung einer ersten bevorzugten Ausführungsform eines erfindungsgemäßen Anbauteils für ein Fahrzeug in der Gestalt eines typischen Kühlergitters;
- Fig. 2: eine perspektivische Darstellung einer zweiten bevorzugten Ausführungsform eines erfindungsgemäßen Anbauteils für ein Fahrzeug;
- Fig. 3: eine Detailansicht des Ausschnitts A aus der schematischen Darstellung gemäß Fig. 1;
- Fig. 4: eine Schnittansicht einer Befestigungsstelle in der zweiten bevorzugten Ausführungsform gemäß der Fig. 2;
- Fig. 5: eine Schnittansicht der Befestigungsstelle gemäß Fig. 4 in einem ersten Montageschritt beim Anbringen der Befestigungsstelle an einem Ausrichtmittel;
- Fig. 6: einen Schnitt durch die Befestigungsstelle gemäß Fig.4 in einem weiteren Montageschritt nach der Justage der Befestigungsstelle in Bezug auf das Ausrichtmittel;
- Fig. 7: eine schematische perspektivische Darstellung einer dritten bevorzugten Ausführungsform eines erfindungsgemäßen Anbauteils für ein Fahrzeug; und
- Fig. 8: eine schematische perspektivische Darstellung einer vierten bevorzugten Ausführungsform eines erfindungsgemäßen Anbauteils für ein Fahrzeug.

### Detaillierte Beschreibung

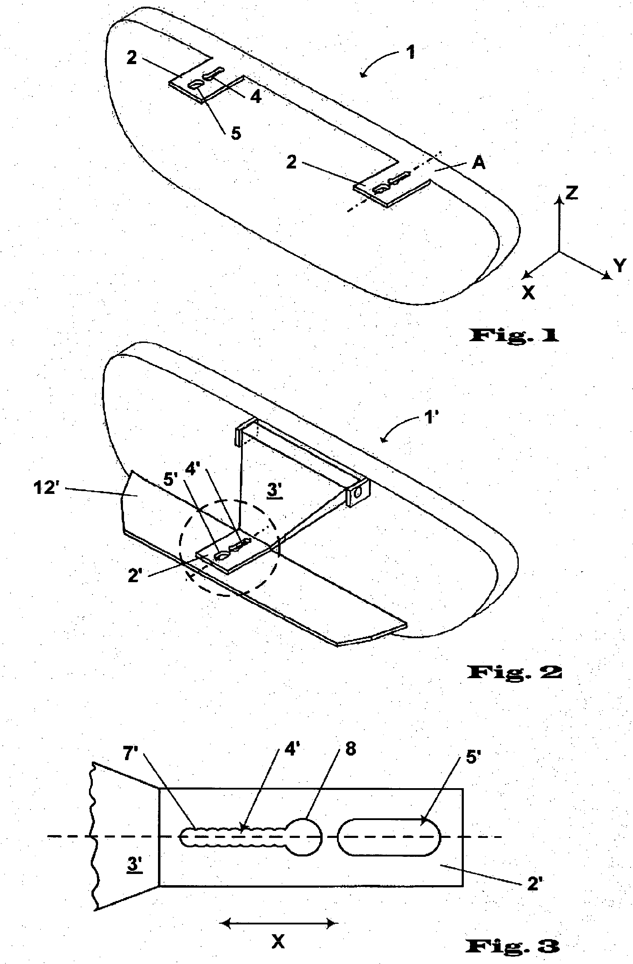

Die Figuren 1, 2, 7 und 8 zeigen schematische perspektivische Ansichten von vier verschiedenen Kühlergittern 1; 1'; 1"; 1"' die als eine erste, eine zweite, eine dritte und eine vierte bevorzugte Ausführungsform eines Anbauteils für ein Fahrzeug nachfolgend genauer beschrieben werden. Alle dargestellten Kühlergitter 1; 1'; 1"; 1"' sind unabhängig von den jeweiligen Einzelheiten in etwa gleicher Lage zum Einbau an der Struktur eines Kraftfahrzeugvorderteils vorgesehen. In den Figuren werden identische Einzelheiten und Bestandteile mit identischen Nummern bezeichnet, wobei entsprechend der besonderen Ausführungsform Apostrophe in unterschiedlicher Anzahl an den Bezugsziffern angefügt sind.

Das in der Figur 1 schematisch dargestellte erste Kühlergitter 1 weist zur Festlegung an den in der Zeichnung nicht dargestellten Anbaustellen am Kraftfahrzeug zwei Befestigungsstellen 2 auf, die an einer oberen Kante als vorzugsweise einstückig ausgebildete rechteckige Laschen ausgeführt sind. Gemäß dem in der Figur 1 rechts schematisch angedeuteten Koordinatensystem fällt die z-Richtung vorliegend mit der Hochachse des Fahrzeugs zusammen, die mit der y-Achse ungefähr die Haupterstreckungsebene des Kühlergitters 1 aufspannt. Aus dieser Haupterstreckungsebene stehen die Befestigungsstellen 2 in ungefähr negativer x-Richtung und damit rückseitig ab. Natürlich stellt die beschriebene Situation mit einem annähernd ebenen Kühlergitter 1 eine erhebliche Vereinfachung gegenüber den am Markt erhältlichen Produkten dar. Jedoch erleichtert die vorgenommene Vereinfachung das Verständnis der Zusammenhänge, die sich davon ausgehend ohne besondere Überlegungen auf die typischen Produktgestaltungen und Einbausituationen ausdehnen lassen.

Das in der Figur 2 schematisch dargestellte zweite Kühlergitter 1' weist anstelle fester Streben oder dergleichen einen verschwenkbar an der oberen Kante angeschlagenen Auslegerarm 3' auf. An dessen abstehendem Ende ist die Befestigungsstelle 2' wiederum als rechteckige Lasche mit einem länglichen Durchbruch 7' ausgebildet. Durch den gelenkig angeschlagenen Auslegeram 3' wird die Einleitung von Knickkräften im Übergang zum Hauptkörper des Kühlergitters 1' vermieden. Zur Abstützung in vertikaler Richtung, also in Richtung der z-Achse, ist an dem zweiten Kühlergitter 1' ein unterhalb des Auslegerarms 3' in der horizontalen Ebene verlaufender Steg 12' starr angeordnet.

Einzelheiten der in den beiden vorangehend beschriebenen Ausführungsformen strukturell identischen Befestigungsstellen 2, 2' lässt die schematische Detailansicht in der Figur 3 erkennen. Dort ist insbesondere dargestellt, dass die als rechteckige Lasche ausgeführte Befestigungsstelle 2 in ihrer Haupterstreckungsrichtung vorzugsweise fluchtend hintereinander angeordnete Durchbrüche 4', 5' aufweist. Diese Haupterstreckungsrichtung fällt wie bereits erläutert mit der x-Richtung des gebräuchlichen Koordinatensystems gemäß Figur 1 zusammen und ist in der Zeichnung durch einen Doppelpfeil angedeutet. Weiterhin ist in der Detailansicht zu erkennen, dass der erste Durchbruch 5' als Langloch ausgeführt ist. Dieser dient zur Aufnahme eines Befestigungsmittels 6', das im einfachsten Fall eine Zylinderschraube oder ein Niet sein kann. Der zweite Durchbruch 4' ist als annähernd gerade verlaufende längliche Öffnung 7' mit beidseitig gezahnter Innenkontur ausgeführt. Dieser Durchbruch 4' ist dazu vorgesehen, ein in der Zeichnung nicht dargestelltes Ausrichtmittel aufzunehmen, das im einfachsten Fall ein Schweißbolzen oder ein Stegniet sein kann.

Die Innenkontur des Durchbruchs 4' ist in einem ersten Abschnitt eine längliche Öffnung 7', deren Gestalt an eine Reihe nebeneinander liegender, sich überlappender runder Bohrungen erinnert. Diese längliche Öffnung 7' mündet einseitig in eine vorzugsweise zylinderische Durchgangsbohrung 8', die gegenüber der lichten Weite des anschließenden Spalts und den überlappenden Bohrungen einen deutlich erkennbaren größeren Durchmesser aufweist. Dadurch kann die Befestigungsstelle 2' über den Kopf des bereits fahrzeugseitig vormontierten Ausrichtmittels aufgeschoben werden, was die Montage erleichtert. Der Werker muss nicht vor der Montage des Kühlergitters 1' die Ausrichtmittel heran holen und an der Fahrzeugstruktur montieren.

Das Ausrichtungsmittel dient in der beschriebenen Ausführungsform lediglich dem Zusammenwirken mit der Innenkontur des Durchbruchs bei der Bereitstellung einer relativen Verrastung der beiden Bauteile in mehreren verschiedenen Positionen und wird nicht zur Befestigung in einer bestimmten Lage genutzt. Vielmehr werden die Befestigungsstellen 2' durch eine in dem Langloch 5' verlaufende Schraube zueinander kraftschlüssig verspannt. Somit ist klar, dass der in der länglichen Öffnung des Durchbruchs 4' vorgesehene Verschiebeweg gleichfalls in dem Langloch 5'vorhanden sein muss.

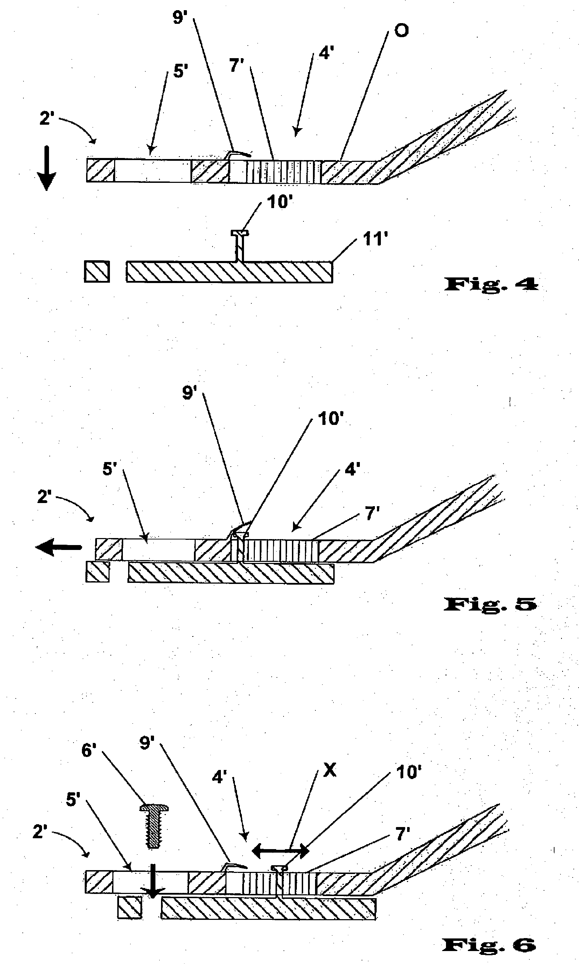

Gemäß Figur 4 ist weiterhin zur Erleichterung der Montage dem zweiten Durchbruch 7' ein Sperrmittel 9' zugeordnet, das vorzugsweise als nachgiebige Zunge ausgestaltet ist. Diese nachgiebige Zunge steht von der Oberseite O der Befestigungsstelle 2' am Rand der einseitig größeren Öffnung nach oben ab. Die gewählte Bezeichnung der Oberseite O entspricht der typischen Situation, in der dies die von der Anbaustelle 9' am Fahrzeug abgewandte Seite ist. Vom Rand der Öffnung 8' verläuft die Zunge ein wenig in der Ebene der Befestigungsstelle 2' zu deren Mitte hin. Die Funktion des Sperrmittels 9' wird im Zusammenhang mit dem Montageverfahren beschrieben.

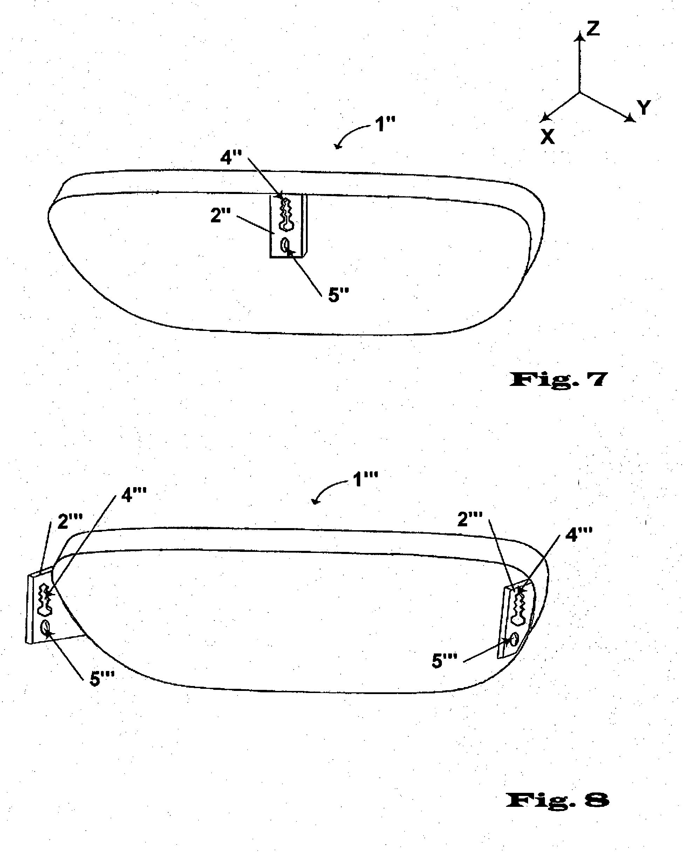

Die Figuren 7 und 8 zeigen die dritte und vierte bevorzugte Ausführungsformen der vorliegenden Erfindung, in denen wiederum die typische Gestalt eines schematisch vereinfachten Kühlergitters zu erkennen ist. Die Befestigungsstellen 2", 2'" entsprechen strukturell denen der eingangs beschriebenen ersten bevorzugten Ausführungsform gemäß Figur 3, sind allerdings für eine Ausrichtung in vertikaler Richtung, also in z-Richtung, angeordnet. In der dritten bevorzugten Ausführungsform 1" gemäß Figur 7 ist nur eine einzige Befestigungsstelle 2" mittig an der oberen Kante vorgesehen. Diese könnte unter günstigen Umständen an einem Kühlergitter so ausgebildet sein, dass das Befestigungsmittel von vorne durch dessen Öffnungen eingesetzt werden kann und dem Werker aus der Arbeitsposition vor dem Fahrzeug zugänglich ist. Dennoch dürfte die Möglichkeit der Ausrichtung des Kühlergitters 1'"' mittels der rastenden Verbindung vor dem Einsetzen der Befestigungsmittel auch hier für den Werker insgesamt eine Vereinfachung bringen. Die beschriebene Möglichkeit einer Manipulation der Befestigungsmittel durch das Kühlergitter 1"' hindurch dürfte sich in einer typischen Verbausituation mit der vierten bevorzugten Ausführungsform nicht ergeben. Dort liegen die Befestigungsstellen 2'" ungefähr in der x-z-Ebene. Das Befestigungsmittel muss dementsprechend ungefähr in y-Richtung eingesetzt werden. Dazu wäre bei geschlossener Motorhaube jedenfalls ein kompliziertes Spezialwerkzeug.

In allen vorangehend beschriebenen Ausführungsformen sind die Ausrichtmittel und die Befestigungsmittel als separate Bauteile ausgebildet, denen jeweils ein besonderer Durchbruch 4, 5; 4'. 5'; 4", 5"; 4"', 5"' in der Befestigungsstelle 2; 2'; 2"; 2'" zugeordnet ist. Es ist allerdings auch eine Ausführungsvariante möglich, die nur ein Element vorsieht, wobei das auszurichtende und zu fixierende Fahrzeugverkleidungsteil einen Durchbruch in einer Befestigüngsstelle aufweist, wobei diese rastend zwischen mehreren Lagen in Bezug auf ein Ausrichtmittel bewegbar ist. Mittels des in dem Durchbruch ausgerichteten und verrasteten Ausrichtmittels wird anschließend eine Fixierung der Befestigungsstelle in der Sollposition erreicht.

Eine bevorzugte Durchführungsform eines erfindungsgemäßen Verfahrens zur Montage eines Anbauteils wird nachfolgend mit Bezug auf die Figuren 4 bis 6 erläutert. Das Verfahren kann beispielsweise angewendet werden bei der Montage eines Kühlergitters an einem karosseriefesten Querträger. Die Ausschnitte in den Figuren 4 bis 6 stellen die Situation im Bereich der Anbaustelle 11'an der Fahrzeugkarosserie dar. In einer typischen Montagesituation liegt der in den Figuren 4 bis 6 dargestellte Ausschnitt in einem Bereich des Motorraums hinter dem nicht dargestellten Kühlergitter. Der Werker arbeitet folglich von der rechten Seite.

In einem ersten Montageschritt gemäß Figur 4 bringt der Werker das Kühlergitter 1' in Bezug auf das Fahrzeug in eine Position, in der die Öffnung 8' des Durchbruchs 4' an der Befestigungsstelle 2' mit einem an der Anbaustelle 11' abstehenden Ausrichtmittel 10' übereinstimmt. Dadurch lässt sich die Befestigungsstelle 2' wie mit dem Pfeil links angedeutet in der Art einer Lasche über das Ausrichtmittel 10' schieben, wobei gemäß Figur 5 die elastische Zunge des Sperrmittels 9' durch den Kopf des Ausrichtmittels 10' nach oben gedrückt wird. Aufgrund der Nachgiebigkeit des Sperrmittels 9' ist dazu nur eine geringe Kraft erforderlich. Im weiteren Verlauf schiebt der Werker das Kühlergitter 1' aus der beschriebenen Lage in der durch den Pfeil in der Figur 5 angedeuteten Richtung etwas in den Motorraum hinein, wodurch das Ausrichtmittel 10' in den Bereich der länglichen Öffnung 7' des Durchbruchs 4' verlagert wird. Da dessen Kopf etwas breiter als die Weite der länglichen Öffnung 7' ist, kann die Befestigungsstelle 2' in dieser Lage nicht mehr von dem Ausrichtmittel 10' abrutschen. Weiterhin ist aufgrund der Verschiebung gemäß Figur 6 das Sperrmittel 9' in seine ursprüngliche Lage zurückgesprungen. Die gegen den Kopf des Ausrichtmittels 10' anstoβende Spitze des Sperrmittels 9' verhindert somit eine versehentliche Zurückbewegung des Kühlrgitters 1' in die vorherige Lage. Das Kühlergitter 1' kann folglich aus der Anhängung am Kraftfahrzeug nicht mehr herausfallen. Der Werker kann seine Aufmerksamkeit an dieser Stelle der Ausrichtung des Kühlergitters 1' voll zuwenden. Dazu zieht oder schiebt der Werker das Kühlergitter 1' nacheinander an allen Befestigungsstellen 2' aus dem Motorraum heraus bzw, in den Motorraum hinein, bis sich ein optisch einwandfreies Fugenbild ergibt. Die rastende Verklemmung des Ausrichtmittels 10' in der länglichen Öffnung 7' benötigt zum Verschieben eine Mindestkraft und lässt überdies nur einige diskrete Positionen zu. Das vermeidet beim Ausrichten einer Befestigungsstelle 2' ein unbeabsichtigtes Verstellen einer bereits ausgerichteten weiteren Befestigungsstelle und erleichtert dem Werker das Wiederauffinden einer früheren Position. Zudem kann der Werker nach dem Ausrichten das Kühlergitter 1' ohne die Gefahr eines Verlusts der gefundenen Einstellung loslassen. Die durch die Innenkontur der länglichen Öffnungen 7' vorgegebene Verrastung ist dabei so bemessen, dass zum Wechsel von einer Position in eine andere eine größere Kraft als die durch das Eigengewicht des Kühlergitters hervorgerufene erforderlich ist.

An dieser Stelle des Zusammenbaus kann der Werker die Motorhaube öffnen, um das Kühlergitter in der ausgerichteten Lage durch zusätzliche Befestigungsmittel 6' endgültig und dauerhaft zu fixieren. Dazu ist in dem fahrzeugfesten Bauteil im Bereich der Anbaustelle 11' eine Durchgangsbohrung mit einem Innengewinde vorgesehen, in die eine Befestigungsschraube 6' eingesetzt wird. Die Befestigungsschraube verläuft weiterhin durch das Langloch 5' an der Befestigungsstelle 2' hindurch und presst diese flach auf die Anbaustelle 11' an der Fahrzeugkarosserie. Als Befestigungsmittel können selbstverständlich alle geeigneten bekannten Elemente verwendet werden, insbesondere kräftige Clipse und Niete.

Aus der Darstellung ist erkennbar, dass der Werker das Kühlergitter bei der Montage in einer gefundenen Ausrichtung ohne die Gefahr des versehentlichen Verstellens loslassen kann. Dadurch ist eine Ausrichtung mit geschlossener Motorhaube auch dann möglich, wenn diese wegen der Zugänglichkeit der Anbaustellen 11' zum Einsetzen der Befestigungsmittel 6' geöffnet sein muss.

## Patentansprüche

1. Anbauteil (1; 1'; 1"; 1"') für ein Fahrzeug mit einer Anzahl von Befestigungsstellen (2; 2'; 2"; 2"'), die mit Durchbrüchen (4; 4'; 4"; 4"') zur Aufnahme von Ausricht- oder Befestigungsmitteln (10'), insbesondere von Schweißbolzen, Schrauben oder Nieten, versehen und dazu eingerichtet sind, in einer Vormontagesituation rastend zwischen mehreren vorgegebenen Positionen in Bezug auf die eingesetzten Ausrichtoder Befestigungsmittel (10') bewegbar gehalten zu sein, um eine Justage des Anbauteils (1; 1'; 1"; 1"') in Bezug auf die Anbaustelle (11) an einem Fahrzeug zu ermöglichen, **dadurch gekennzeichnet, dass** die Positionen durch die Innenkontur der Durchbrüche (4, 4') vorgegeben sind.

2. Anbauteil (1; 1'; 1"; 1"') nach Anspruch 1, wobei eine Anzahl der Durchbrüche (4,4') mehrere Positionen zur formschlüssigen Halterung der eingesetzten Ausricht- oder Befestigungsmittel (10') bietet, deren Verlagerung durch eine elastische Verformung der Befestigungsstellen(2, 2') aufgrund einer vorgegebenen Kraft in Richtung der Verlagerung möglich ist.

3. Anbauteil (1') nach einem der vorangehenden Ansprüche, wobei die Durchbrüche (4') die Gestalt einer geraden oder gebogenen länglichen Öffnung (7') mit einseitig oder beidseitig gewellter oder gezahnter Innenseite aufweisen.

4. Anbauteil (1') nach Anspruch 3, wobei die Durchbrüche (4') die Gestalt einer Reihe überlappender runder Bohrungen haben.

5. Anbauteil (1') für ein Kraftfahrzeug nach einem der vorangehenden Ansprüche, wobei eine Anzahl der Durchbrüche (4') einen Abschnitt (8') mit einem vergrößerten Durchmesser aufweist, der den Durchtritt des Kopfteils eines am Fahrzeug ausgebildeten oder vormontierten Ausricht- oder Befestigungsmittels (10') und insbesondere eines Schweißbolzens oder eines Stegniets ermöglicht.

6. Anbauteil (1') nach Anspruch 5, wobei den Durchbrüchen (4') jeweils Sperrmittel (9') zugeordnet sind, die einer Verschiebung der Ausricht- oder Befestigungsmittel (10') aus der den jeweiligen Durchbruch (4') hintergreifenden Lage in den Abschnitt (8') mit vergrößertem Durchmesser entgegen wirken.

7. Anbauteil (1') nach Anspruch 6, wobei die Sperrmittel (9') als nachgiebige Zungen ausgestaltet sind, die sich an der Oberseite (O) der Befestigungsstelle (2') über dem Abschnitt (8') mit dem vergrößerten Durchmesser erstrecken.

8. Anbauteil (1; 1'; 1"; 1"') nach einem der vorangehenden Ansprüche, wobei an den Befestigungsstellen (2, 2') zusätzliche Langlöcher oder Schlitze (5; 5'; 5"; 5"') zur Aufnahme zusätzlicher Befestigungsmittel und insbesondere von Schrauben oder Nieten ausgebildet sind.

9. Anbauteil (1; 1'; 1"; 1"') nach einem der vorangehenden Ansprüche, das eine Kühlerverblendung oder ein Kühlergitter für ein Kraftfahrzeug ist.

10. Montageverfahren eines Anbauteils (1; 1'; 1"; 1"') gemäß einem der vorangehenden Ansprüche an einem Fahrzeug, umfassend Schritte zum:
- Anbringen des Fahrzeuganbauteils (1; 1'; 1"; 1"') mit einer Anzahl von Befestigungsstellen (2; 2'; 2", 2"') an fahrzeugseitig ausgebildeten oder vormontierten Ausricht- oder Befestigungsmitteln (10') in einer rastend eingeschränkt bewegbaren Anordnung;
- Ausrichten des Fahrzeugverkleidungsteils (1; 1'; 1"; 1"') zwischen den rastenden Positionen; und
- Fixieren des Fahrzeugverkleidungsteils (1; 1'; 1"; 1"') durch zusätzliche Befestigungsmittel (6') im Bereich der Befestigungsstellen (2; 2'; 2"; 2"').

## Claims

1. Attachment part (1; 1'; 1"; 1'") for a vehicle having a plurality of fastening points (2; 2'; 2"; 2"') which are provided with through-holes (4; 4'; 4"; 4"') for receiving aligning or fastening means (10'), in particular welded bolts, screws or rivets, and are designed to be movably held in a premounted situation in a latching manner between a plurality of predetermined positions relative to the aligning or fastening means (10') used, in order to permit an adjustment of the attachment part (1; 1'; 1"; 1"') relative to the attachment point (11) on a vehicle, **characterized in that** the positions are predetermined by the internal contour of the through-holes (4, 4').

2. Attachment part (1; 1'; 1"; 1'") according to Claim 1, wherein a plurality of through-holes (4, 4') provides a plurality of positions for positively retaining the aligning or fastening means (10') used, the extension thereof being possible by a resilient deformation of the fastening points (2, 2') due to a predetermined force in the direction of displacement.

3. Attachment part (1') according to one of the preceding claims, wherein the through-holes (4') have the form of a linear or curved elongate opening (7') with a wave-shaped or toothed inner face on one side or both sides.

4. Attachment part (1') according to Claim 3, wherein the through-holes (4') take the form of a row of overlapping round bores.

5. Attachment part (1') for a motor vehicle according to one of the preceding claims, wherein a plurality of through-holes (4') has a portion (8') with an enlarged diameter which permits the penetration of the top part of an aligning or fastening means (10') configured or premounted on the vehicle and, in particular, permits a welded bolt or a stud rivet.

6. Attachment part ('1') according to Claim 5, wherein the through-holes (4') in each case are assigned locking means (9') which counteract a displacement of the aligning or fastening means (10') from the position engaging in each case behind the through-hole (4') in the portion (8') with the enlarged diameter.

7. Attachment part (1') according to Claim 6, wherein the locking means (9') are designed as resilient tongues which extend on the upper face (O) of the fastening point (2') over the portion (8') with the enlarged diameter.

8. Attachment part (1; 1'; 1"; 1"') according to one of the preceding claims, wherein on the fastening points (2, 2') additional elongate holes or slots (5; 5'; 5"; 5"') are configured for receiving additional fastening means and, in particular, screws or rivets.

9. Attachment part (1; 1'; 1"; 1"') according to one of the preceding claims, which is a radiator cover or a radiator front panel for a motor vehicle.

10. Mounting method of an attachment part (1; 1'; 1"; 1"') according to one of the preceding claims on a vehicle, comprising steps for:
- attaching the vehicle attachment part (1; 1'; 1"; 1"') with a plurality of fastening points (2; 2'; 2"; 2"') to aligning or fastening means (10') configured or premounted on the vehicle side, in a latched arrangement with limited mobility;
- aligning the vehicle attachment part (1; 1'; 1"; 1"') between the latched positions; and
- fixing the vehicle attachment part (1; 1'; 1"; 1"') by additional fastening means (6') in the region of the fastening points (2; 2'; 2"; 2"').

## Revendications

1. Pièce rapportée (1 ; 1' 1" ; 1"') pour un véhicule, comprenant un certain nombre de points de fixation (2; 2'; 2"; 2"'), qui sont pourvus de passages (4 ; 4' ; 4" ; 4"') pour recevoir des moyens d'alignement ou de fixation (10'), en particulier des goujons à souder, des vis ou des rivets, et qui sont conçus pour être retenus de manière déplaçable dans une situation de pré-montage d'une manière encliquetée entre plusieurs positions prédéfinies par rapport aux moyens d'alignement ou de fixation (10') utilisés, afin de rendre possible un ajustement de la pièce rapportée (1 ; 1' ; 1" ; 1"') par rapport au point de montage (11) sur un véhicule, **caractérisée en ce que** les positions sont prédéfinies par le contour intérieur des passages (4, 4').

2. Pièce rapportée (1 ; 1'; 1"; 1'") selon la revendication 1, dans laquelle un certain nombre de passsages (4, 4') offrent plusieurs positions pour la retenue par engagement par complémentarité de formes des moyens d'alignement ou de fixation (10') utilisés, dont le déplacement est possible au moyen d'une déformation élastique des points de fixation (2, 2') en raison d'une force prédéfinie dans la direction du déplacement.

3. Pièce rapportée (1') selon l'une quelconque des revendications précédentes, dans laquelle les passages (4') présentent la forme d'une ouverture allongée rectiligne ou courbe (7') pourvue d'un côté intérieur ondulé ou denté d'un côté ou des deux côtés.

4. Pièce rapportée (1') selon la revendication 3, dans laquelle les passages (4') ont la forme d'une rangée d'alésages ronds se chevauchant.

5. Pièce rapportée (1') pour un véhicule automobile selon l'une quelconque des revendications précédentes, dans laquelle un certain nombre de passages (4') comprennent une portion (8') présentant un diamètre agrandi qui rend possible le passage de la partie de tête d'un moyen d'alignement ou de fixation (10') réalisé ou pré-monté sur le véhicule, et en particulier d'un goujon à souder ou d'une entretoise rivée.

6. Pièce rapportée (1') selon la revendication 5, dans laquelle des moyens de blocage (9') sont respectivement associés aux passages (4'), lesquels moyens de blocage s'opposent à un déplacement des moyens d'alignement ou de fixation (10') à partir de la position d'entrée en prise par l'arrière avec le passage respectif (4') dans la portion (8') présentant un diamètre agrandi.

7. Pièce rapportée (1') selon la revendication 6, dans laquelle les moyens de blocage (9') sont configurés sous forme de languettes souples qui s'étendent sur le côté supérieur (O) du point de fixation (2') au-dessus de la portion (8') présentant le diamètre agrandi.

8. Pièce rapportée (1 ; 1'; 1"; 1"') selon l'une quelconque des revendications précédentes, dans laquelle des trous oblongs ou fentes supplémentaires (5 ; 5' ; 5" ; 5"') sont réalisés aux points de fixation (2, 2') pour recevoir des moyens de fixation supplémentaires et en particulier des vis ou des rivets.

9. Pièce rapportée (1 ; 1' ; 1" ; 1"') selon l'une quelconque des revendications précédentes, laquelle est un cache-radiateur ou une grille de radiateur pour un véhicule automobile.

10. Procédé de montage d'une pièce rapportée (1 ; 1' ; 1" ; 1"') selon l'une quelconque des revendications précédentes sur un véhicule, comprenant les étapes de :
- attachement de la pièce rapportée de véhicule (1 ; 1' ; 1" ; 1"'), à l'aide d'un certain nombre de points de fixation (2 ; 2' ; 2" ; 2"'), à des moyens d'alignement ou de fixation (10') réalisés ou pré-montés du côté du véhicule, suivant un agencement encliqueté déplaçable de manière limitée ;
- alignement de la pièce rapportée de véhicule (1 ; 1' ; 1" ; 1"') entre les positions encliquetées ; et
- fixation de la pièce rapportée de véhicule (1 ; 1' ; 1" ; 1"') par le biais de moyens de fixation supplémentaires (6') dans la région des points de fixation (2 ; 2' ; 2" ; 2"').
